# EUROPÄISCHE PATENTSCHRIFT

(11) **EP 3 383 669 B1**
(45) Veröffentlichungstag und Bekanntmachung des Hinweises auf die Patenterteilung: **29.01.2020**
(21) Anmeldenummer: 16763530.9
(22) Anmeldetag: 13.09.2016
(51) Int. Cl.: B60C 11/03

(54) **FAHRZEUGLUFTREIFEN**
PNEUMATIC VEHICLE TIRES
PNEUMATIQUE DE VÉHICULE

(30) Priorität: 04.12.2015 DE 102015224291
(43) Veröffentlichungstag der Anmeldung: 10.10.2018
(73) Patentinhaber: Continental Reifen Deutschland GmbH, 30165 Hannover (DE)
(72) Erfinder: BROCKMANN, Jürgen, 30171 Hannover (DE); DIENSTHUBER, Franz, 60528 Frankfurt (DE); SENG, Matthias, 30453 Hannover (DE)
(74) Vertreter: Finger, Karsten
(86) Internationale Anmeldenummer: PCT/EP2016/071493
(87) Internationale Veröffentlichungsnummer: WO 2017/092896

(56) Entgegenhaltungen:
- EP-A1- 2 222 481
- EP-A1- 2 965 925
- DE-A1- 10 145 061
- DE-A1-102008 037 563

## Beschreibung

Die Erfindung betrifft einen Fahrzeugluftreifen für Personenkraftwagen, insbesondere für den Einsatz unter winterlichen Fahrbedingungen, mit einem Laufstreifen, welcher durch Rillen, insbesondere Diagonalrillen oder Querrillen, und durch Umfangsrillen in jeweils mit einer Anzahl von Einschnitten versehene Profilblöcke, zu welchen schulterseitige Profilblöcke gehören, gegliedert ist, wobei in den schulterseitigen Profilblöcken Rillen unter einem Winkel von 60° bis 85° zur Umfangsrichtung verlaufen, sich die Einschnitte zumindest im Wesentlichen parallel zu den Rillen erstrecken und jeweils zumindest zwei Einschnitte eine Breite von 0,4 mm bis 0,6 mm aufweisen, wobei je eine Diagonalrille gemeinsam mit den an sie unmittelbar angrenzenden Profilblöcken jeweils ein Pitch bildet, wobei die Pitches in zumindest zwei unterschiedlichen Pitchlängen vorgesehen sind und am Rand der Bodenaufstandsfläche des Reifens dementsprechend unterschiedliche Umfangslängen aufweisen.

Ein derartiger Fahrzeugluftreifen ist beispielsweise aus der EP 2 222 481 B1 bekannt. In den schulterseitigen Profilblöcken ist jeweils eine parallel zu den Diagonalrillen verlaufende Zusatzrille ausgebildet, welche jeweils in die den schulterseitigen Profilblock innenseitig begrenzenden Umfangsrille einmündet und den jeweiligen schulterseitigen Profilblock zweiteilt. Bei diesem bekannten Laufstreifen weisen die Zusatzrillen eine konstante Breite von 3 mm bis 4 mm auf und sollen auf nassen Fahrbahnen die Ableitung von Wasser aus der Bodenaufstandsfläche verbessern.

Aus der DE 10 2008 037 563 A1 ist ein Fahrzeugluftreifen mit einem Laufstreifen mit zwei mittleren Profilbändern und zwei schulterseitigen Profilblockreihen bekannt, welche durch Umfangsrillen voneinander getrennt und jeweils mit parallel zueinander verlaufenden Einschnitten versehen sind, wobei schmale Einschnitt mit einer Breite von 0,4 mm bis 0,8 mm und breite Einschnitte mit einer Breite von 1,0 mm bis 4,0 mm vorgesehen sind, wobei jedem breiten Einschnitt zumindest ein schmaler Einschnitt benachbart ist. Dadurch soll eine hohe Anzahl an Griffkanten, unter Beibehaltung einer hohen Profilsteifigkeit, zur Verfügung gestellt werden.

Die DE 101 45 061 A1 offenbart einen Fahrzeugluftreifen mit einem Laufstreifen, dessen Profilstrukturen gemäß einer Pitchfolge mit aufeinanderfolgenden Pitches mit zumindest zwei unterschiedlichen Pitchlängen angeordnet sind. Der Laufstreifen weist Profilblockreihen mit Querrillen auf, wobei die Querrillen innerhalb jeder Profilblockreihe zumindest weitgehend übereinstimmend ausgeführt sind.

Ferner ist aus der EP 2 965 925 A1 ein weiterer Fahrzeugluftreifen mit einem Laufstreifen, dessen Profilstrukturen gemäß einer Pitchfolge mit aufeinanderfolgenden Pitches unterschiedlicher Pitchlängen angeordnet sind, bekannt. Der Laufstreifen weist zwei schulterseitige Profilblockreihen mit Profilblöcken auf. In jenen schulterseitigen Profilblöcken, die innerhalb von Pitches mit der größten Pitchlänge verlaufen, verläuft je eine zusätzliche Querrille, die den jeweiligen schulterseitigen Profilblock im Verhältnis 1:1 bis 2:3 in zwei Profilblockteile gliedert. In den schulterseitigen Profilblöcken, die innerhalb von Pitches mit der kleinsten Pitchlänge verlaufen, ist keine zusätzliche Querrille vorgesehen. Derartige schulterseitige Profilblockreihen sollen sowohl eine gleichmäßige Umfangsteifigkeit als auch eine geleichmäßige Quersteifigkeit aufweisen.

Laufstreifen mit Diagonalrillen als Hauptrillen, welche im zentralen Bereich des Laufstreifens unter einem relativ kleinen Winkel zur Umfangsrichtung des Reifens verlaufen und schulterseitig bzw. zwischen den schulterseitig verlaufenden Profilblöcken nahezu in axialer Richtung verlaufen, sind erfahrungsgemäß besonders vorteilhaft, um gleichermaßen einen guten Schneegriff, gute Trockenhandlingeigenschaften und ein gutes Wasserableitvermögen sicherzustellen. Solche Laufstreifen weisen daher im mittleren Bereich des Laufstreifens eher schmale mittige Profilblöcke, in den Schulterbereichen breite, große und querorientierte Profilblöcke auf, sodass der Verdrängungsweg für Wasser im Bereich der Schulterblöcke größer ist als im Bereich der mittleren Profilblöcke. Die Querorientierung der schulterseitigen Profilblöcke ist aus Gründen der Profilquersteifigkeit, welche eine wichtige Kennzahl für die Handlingeigenschaften auf trockenen Fahrbahnen ist, von Bedeutung. Die aus der EP 2 222 481 B1 bekannte Zweiteilung der Schulterblöcke durch Zusatzrillen verbessert zwar die Wasserableitung, vermindert jedoch die für das Trockenhandling erforderliche Quersteifigkeit in diesem Bereich.

Der Erfindung liegt daher die Aufgabe zu Grunde, bei einem Fahrzeugluftreifen der eingangs genannten Art den Laufstreifen im Bereich der schulterseitigen Profilblöcke derart auszuführen, dass weiterhin eine gute Wasserableitung gewährleistet ist, die Trockenhandlingeigenschaften und auch die Schneegriffeigenschaften jedoch verbessert sind.

Gelöst wird die gestellte Aufgabe erfindungsgemäß dadurch, dass in schulterseitigen Profilblöcken, welche zu Pitches mit einer Umfangslänge von mindestens 28 mm gehören, zumindest zwei Einschnitte mit einer Breite von 0,4 mm bis 0,6 mm verlaufen, wobei zwischen zwei dieser Einschnitte ein weiterer Einschnitt angeordnet ist, welcher eine Breite von 1,1 mm bis 2,7 mm aufweist, wobei der weitere Einschnitt in einem Profilblock, welcher zu einem Pitch gehört, dessen Umfangslänge 28 mm bis 32 mm beträgt, eine Breite aufweist, die kleiner ist als die Breite eines weiteren Einschnittes in einem Profilblock, welcher zu einem Pitch größerer Umfangslänge gehört.

Die im mittleren Bereich der schulterseitigen Profilblöcke angeordneten, etwas breiter ausgebildeten Einschnitte leisten einen Beitrag zur Wasserableitung, sodass die von den Diagonalrillen nach außen zu verdrängende Wassermenge etwas geringer wird. Von besonderem Vorteil sind die breiteren Einschnitte vor allem auf schneeigem Untergrund, da sich in den Einschnitten Schnee gut sammeln kann und dadurch die Schnee- Schneereibung und die übertragbaren Umfangskräfte erhöht werden. Die schmalen Einschnitte gewährleisten weiterhin eine gegenseitige Abstützung der von sämtlichen Einschnitten in den schulterseitigen Profilblöcken gebildeten Profilblockelemente.

Die Differenz der Breiten von weiteren Einschnitten in jenen Profilblöcken, die zu schrittweise eine größere Umfangslänge aufweisenden Pitches gehören, beträgt vorzugsweise jeweils mindestens 0,2 mm. Die Breite der weiteren Einschnitte korreliert daher mit der Umfangslänge der Pitches, wobei diese Maßnahme für eine gleichmäßige Umfangssteifigkeit in den schulterseitigen Profilblockreihen und damit einen gleichmäßigen Abrieb besonders vorteilhaft ist.

Darüber hinaus ist es günstig, in schulterseitigen Profilblöcken mit größerer Umfangserstreckung einen größeren Beitrag zur Wasserableitung durch die weiteren breiteren Einschnitte vorzusehen. Diesbezüglich besonders vorteilhafte Ausgestaltungen der Erfindung sehen vor, dass der weitere Einschnitt in einem Profilblock, welcher zu einem Pitch gehört, dessen Umfangslänge 28 mm bis 32 mm beträgt, eine Breite von 1,1 mm bis 2,2 mm, insbesondere 1,3 mm bis 1,6 mm, aufweist, sowie dass der weitere Einschnitt, welcher zu einem Pitch gehört, dessen Umfangslänge ≥ 34 mm ist, eine Breite von 1,4 mm bis 2,7 mm, insbesondere 1,5 mm bis 2,1 mm, aufweist.

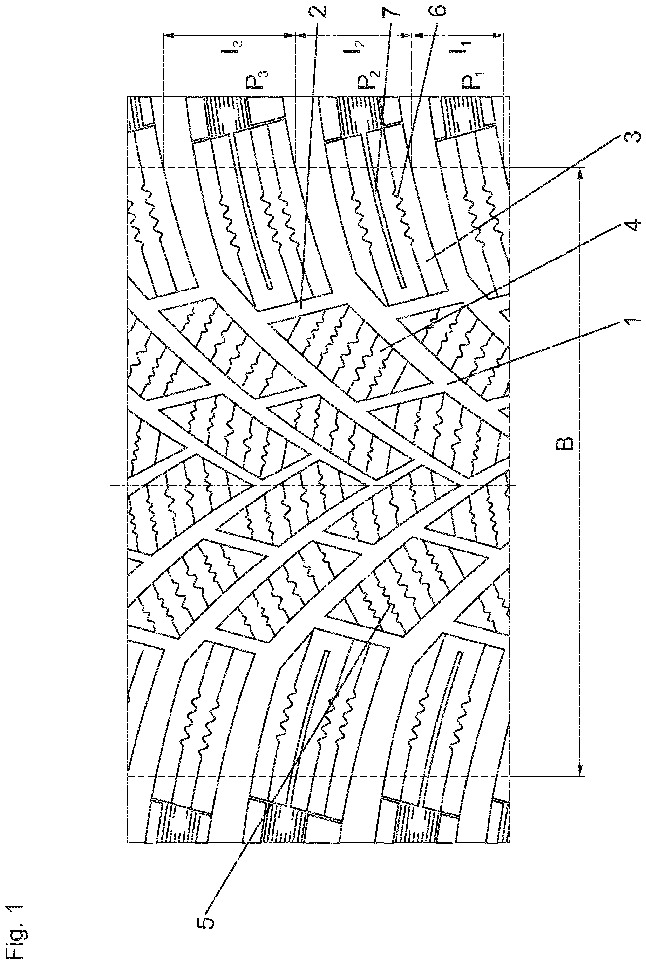

Weitere Merkmale, Vorteile und Einzelheiten der Erfindung werden nun anhand der Zeichnung, die ein Ausführungsbeispiel darstellt, näher beschrieben. Dabei zeigt die einzige Figur, Fig. 1, eine Draufsicht auf eine Teilabwicklung eines Laufstreifens eines Fahrzeugluftreifens.

Der in Fig. 1 gezeigte Laufstreifen ist für Winterreifen oder Ganzjahresreifen von Personenkraftwagen, Vans oder dergleichen vorgesehen und laufrichtungsgebunden ausgeführt. Mit B ist die Breite des bodenberührenden Teils des Laufstreifens bezeichnet, also jene Breite, über welche der Reifen beim Abrollen mit dem Untergrund in Kontakt tritt. Der bodenberührende Teil des Laufstreifens entspricht dem statisch ermittelten Footprint gemäß E.T.R.T.O.-Standards (Last bei 70 % der Tragfähigkeit bei einem Innendruck von 2,5 bar, Innendruck 85 % von 2,5 bar).

Beim dargestellten Ausführungsbeispiel ist der Laufstreifen über seine Breite B mit V-förmig verlaufenden Diagonalrillen 1 versehen und durch zwischen benachbarten Diagonalrillen 1 verlaufende Umfangsrillen 2 in schulterseitige Profilblöcke 3 und in im mittleren Bereich des Laufstreifens angeordnete mittige Profilblöcke 4 gegliedert. Die Diagonalrillen 1 sind die Hauptrillen des Laufstreifens und verlaufen im zentralen Bereich des Laufstreifens unter einem Winkel α ≤ 60°, insbesondere von 25° bis 40°, zur Umfangsrichtung, in Richtung zu den Laufstreifenrändern wird der Winkel α zunehmend größer, sodass die Diagonalrillen 1 zwischen den schulterseitigen Profilblöcken 3 unter einem Winkel α von 65° bis 85° zur Umfangsrichtung verlaufen. Durch die sich in Richtung Laufstreifenränder ändernde Winkelung der Diagonalrillen 1 relativ zur Umfangsrichtung weisen die schulterseitigen Profilblöcke 3 relativ große Erstreckungen in Umfangsrichtung auf. Die in der einen Laufstreifenhälfte verlaufenden Diagonalrillen 1 sind gegenüber jenen, die in der anderen Laufstreifenhälfte verlaufen, in Umfangsrichtung etwas versetzt, wobei im zentralen Bereich des Laufstreifens die Diagonalrillen 1 ineinander münden. Bekannter Weise weisen ferner die Diagonalrillen 1 im Laufstreifenzentrum eine geringere Breite auf als schulterseitig, wobei die Breite vom zentralen Bereich in Richtung Laufstreifenränder kontinuierlich größer wird. In jeder Laufstreifenhälfte sind ferner zwischen in Umfangsrichtung benachbarten Diagonalrillen 1 jeweils zwei mittige Profilblöcke 4 vorgesehen.

Ein Reifen mit dem durch den Verlauf der Diagonalrillen 1 laufrichtungsgebunden ausgeführten Laufstreifen ist derart am Fahrzeug zu montieren, dass die laufstreifeninnenseitigen Enden der Diagonalrillen 1 beim Abrollen des Reifens bei Vorwärtsfahrt zuerst in den Untergrund eintreten.

In den mittigen Profilblöcken 4 ist jeweils eine größere Anzahl, insbesondere zumindest fünf, von im Wesentlichen in axialer Richtung orientierten Einschnitten 5 ausgebildet, die in Draufsicht abschnittsweise wellenförmig verlaufende Abschnitte aufweisen. Auch in den schulterseitigen Profilblöcken 3 sind Einschnitte 6, 7 ausgebildet, auf welche weiter unten näher eingegangen wird.

Die Profilstrukturen, insbesondere die Profilblöcke 3, 4 und die Diagonalrillen 1, sind, um ein unauffälliges und möglichst geringes Abrollgeräusch sicherzustellen, nach einem Verfahren der Pitchlängenvariation geräuschoptimiert ausgelegt. Dazu bilden in bekannter Weise diese Profilstrukturen sogenannte Pitches -gleichartig ausgeführte, sich über den Umfang des Laufstreifen wiederholende Profilstrukturen unterschiedlicher Pitchlängen. Wie bekannt werden die Pitches über den Reifenumfang gemäß einer sogenannten Pitchfolge angeordnet, die rechnerisch ermittelt wird, wobei die Gesamtanzahl der Pitches über den Reifenumfang in einem PKW-Winterreifen in der Größenordnung von 65 bis 90 beträgt. In einer solchen Pitchfolge können an manchen Stellen des Reifenumfanges zwei oder mehr Pitches gleicher Pitchlänge aufeinander folgen.

Bei der in der einzigen Figur dargestellten Ausführungsvariante sind drei Pitches P₁, P₂ und P₃ mit drei unterschiedlichen Pitchlängen vorgesehen, wobei im Rahmen der Erfindung die Umfangslängen L₁, L₂ und L₃ der Pitches P₁, P₂ und P₃ an den Rändern der Bodenaufstandsfläche von Bedeutung sind und betrachtet werden Das Pitch P₁ weist die geringste Umfangslänge L₁ auf, das Pitch P₃ die größte Umfangslänge L₃, das Pitch P₂ weist eine Umfangslänge L₂ auf, die zwischen der geringsten und der größten Umfangslänge L₁, L₃ liegt.

Grundsätzlich gehören zu jedem Pitch P₁, P₂ und P₃ jeweils die mittigen Profilblöcke 4 und in jeder Reifenschulter je ein schulterseitiger Profilblock 3, mitsamt der, bezogen auf die Abrollrichtung des Reifens bei Vorwärtsfahrt, an die jeweils auslaufenden Profilblockkanten anschließenden Diagonalrille 1. Die Umfangslänge L₁ des kürzesten Pitch beträgt 23 mm bis 26 mm, die Umfangslänge L₂ des mittleren Pitch P₂ 28 mm bis 32 mm und die Umfangslänge L₃ des längsten Pitch P₃ beträgt 34 mm bis 38 mm. Bei einer alternativen Ausführungsform der Erfindung, bei welcher der Laufstreifen bzw. seine Profilstrukturen jeweils in zwei Pitches unterschiedlicher Umfangslängen gegliedert ist bzw. sind, beträgt die entsprechende Umfangslänge des längeren Pitch 37 mm bis 43 mm, das kürzere Pitch weist eine Länge von 28 mm bis 32 mm auf.

Die Einschnitte 6 in den schulterseitigen Profilblöcken 3 erstrecken sich jeweils parallel zueinander und zu den zwischen benachbarten Profilblöcken 3 verlaufenden Abschnitten der Diagonalrillen 1 und weisen eine Breite von 0,4 mm bis 0,6 mm auf. In jedem Profilblock 3 sind zumindest zwei Einschnitte 6 vorgesehen, welche bei der gezeigten Ausführung einen in Draufsicht in Wellen- bzw. Zickzackform verlaufenden mittleren Abschnitt und zwei an diesen anschließende in Draufsicht gerade verlaufende Endabschnitte aufweisen. Die Einschnitte 6 durchqueren die Profilblöcke 4 und verlaufen bis über die Bodenaufstandsflächenbreite B hinaus. Die Einschnitte 7 verlaufen in Draufsicht im Wesentlichen geradlinig und parallel zu den Einschnitten 6 und beginnen bei der gezeigten Ausführung laufstreifeninnenseitig in einem Abstand von 3 mm bis 6 mm vor der Umfangsrille 2. Auch die Einschnitte 7 verlaufen über die Bodenaufstandsflächenbreite hinaus. Die Einschnitte 7 besitzen ferner eine Breite, die größer ist als die Breite der Einschnitte 6. Sämtliche Einschnitte 6, 7 weisen vorzugsweise eine über ihre Erstreckung konstante Breite auf. Die Anordnung sämtlicher Einschnitte 6, 7 in jedem Profilblock 3 ist ferner derart, dass die Einschnitte 6, 7 den Profilblock 3 in im Wesentlichen eine gleich große Umfangserstreckung aufweisende in axialer Richtung langgestreckte Profilblockelemente gliedern.

In Profilblöcken 3, die zu einem Pitch P₁ mit der kleinsten Umfangslänge L₁ gehören, verlaufen jeweils zwei Einschnitte 6. In Profilblöcken 3, welche zu Pitches P₂ mit der mittleren Umfangslänge L₂ gehören, verlaufen jeweils zwei Einschnitte 6 und zwischen diesen ein Einschnitt 7, welcher eine Breite von 1,1 mm bis 2,2 mm, insbesondere 1,3 mm bis 1,6 mm aufweist. In Profilböcken 3, welche zu Pitches P₃ mit der größten Umfangslänge L₃ gehören, sind jeweils drei Einschnitte 6 angeordnet und zusätzlich ein Einschnitt 7 zwischen zwei Einschnitten 6, wobei der Einschnitt 7 in Profilböcken 3, welche zu Pitches P₃ gehören, eine Breite von 1,4 mm bis 2,7 mm, insbesondere 1,5 mm bis 2,1 mm aufweist und um mindestens 0,2 mm breiter ist als der Einschnitt 7 in einem Profilblock 3, welcher zu einem Pitch P₂ gehört.

Weist der Laufstreifen bzw. weisen die Profilstrukturen Pitches mit zwei unterschiedlichen Umfangslängen auf, erfolgt im kürzeren Pitch eine Anordnung und Ausführung der Einschnitte 6, 7 wie oben zum mittleren Pitch P₂ beschrieben, im längeren Pitch eine Ausführung und Anordnung der Einschnitte 6, 7 wie oben zum längsten Pitch P₃ beschrieben.

Die Erfindung ist auf laufrichtungsgebunden ausgeführte Laufstreifen nicht eingeschränkt. Die Diagonalrillen können in jeder Laufstreifenhälfte übereinstimmende Erstreckungen aufweisen und sich daher etwa S-förmig über die Laufstreifenbreite erstrecken. Des Weiteren kann der Laufstreifen durch Querrillen und Umfangrillen in Profilblöcke gegliedert sein.

### Bezugsziffernliste

- 1: Diagonalrille
- 2: Umfangsrille
- 3: schulterseitiger Profilblock
- 4: mittiger Profilblock
- 5: Einschnitt
- 6: Einschnitt
- 7: Einschnitt
- B: Breite
- P₁, P₂, P₃: Pitch
- L₁, L₂, L₃: Umfangslänge

## Patentansprüche

1. Fahrzeugluftreifen für Personenkraftwagen, insbesondere für den Einsatz unter winterlichen Fahrbedingungen, mit einem Laufstreifen, welcher durch Rillen (1), insbesondere Diagonalrillen oder Querrillen, und durch Umfangsrillen (2) in jeweils mit einer Anzahl von Einschnitten (5, 6, 7) versehene Profilblöcke (3, 4), zu welchen schulterseitige Profilblöcke (3) gehören, gegliedert ist, wobei in den schulterseitigen Profilblöcken (3) Rillen (1) unter einem Winkel von 60° bis 85° zur Umfangsrichtung verlaufen, sich die Einschnitte (6, 7) zumindest im Wesentlichen parallel zu den Rillen (1) erstrecken und jeweils zumindest zwei Einschnitte (6) eine Breite von 0,4 mm bis 0,6 mm aufweisen, wobei je eine Rille (1) gemeinsam mit den an sie unmittelbar angrenzenden Profilblöcken (3, 4) jeweils ein Pitch (P₁, P₂, P₃) bildet, wobei die Pitches (P₁, P₂, P₃) in zumindest zwei unterschiedlichen Pitchlängen vorgesehen sind und am Rand der Bodenaufstandsfläche des Reifens dementsprechend unterschiedliche Umfangslängen (L₁, L₂, L₃) aufweisen,
**dadurch gekennzeichnet,**
**dass** in schulterseitigen Profilblöcken (3), welche zu Pitches (P₂, P₃) mit einer Umfangslänge (L₂, L₃) von mindestens 28 mm gehören, zumindest zwei Einschnitte (6) mit einer Breite von 0,4 mm bis 0,6 mm verlaufen, wobei zwischen zwei dieser Einschnitte (6) ein weiterer Einschnitt (7) angeordnet ist, welcher eine Breite von 1,1 mm bis 2,7 mm aufweist,
wobei der weitere Einschnitt (7) in einem Profilblock (3), welcher zu einem Pitch (P₂) gehört, dessen Umfangslänge (L₂) 28 mm bis 32 mm beträgt, eine Breite aufweist, die kleiner ist als die Breite eines weiteren Einschnittes (7) in einem Profilblock (3), welcher zu einem Pitch (P₃) größerer Umfangslänge (L₃) gehört.

2. Fahrzeugluftreifen nach Anspruch 1, **dadurch gekennzeichnet, dass** der weitere Einschnitt (7) in einem Profilblock (3), welcher zu einem Pitch (P₂) gehört, dessen Umfangslänge (L₂) 28 mm bis 32 mm beträgt, eine Breite von 1,1 mm bis 2,2 mm, insbesondere 1,3 mm bis 1,6 mm, aufweist.

3. Fahrzeugluftreifen nach Anspruch 1 oder 2, **dadurch gekennzeichnet, dass** der weitere Einschnitt (7), welcher zu einem Pitch (P₃) gehört, dessen Umfangslänge (L₃) ≥ 34 mm ist, eine Breite von 1,4 mm bis 2,7 mm, insbesondere 1,5 mm bis 2,1 mm, aufweist.

4. Fahrzeugluftreifen nach einem der Ansprüche 1 bis 3, **dadurch gekennzeichnet, dass** die Differenz der Breiten von weiteren Einschnitten (7) in den Profilblöcken (3), die zu schrittweise eine größere Umfangslänge aufweisenden Pitches gehören, jeweils mindestens 0,2 mm beträgt.

## Claims

1. Pneumatic vehicle tyre for passenger cars, in particular for use in winter driving conditions, having a tread that is subdivided by grooves (1), in particular diagonal grooves or transverse grooves, and by circumferential grooves (2) into profile blocks (3, 4) which are each provided with a number of sipes (5, 6, 7) and to which shoulder-side profile blocks (3) belong, wherein, in the shoulder-side profile blocks (3), grooves (1) extend at an angle of 60° to 85° to the circumferential direction, the sipes (6, 7) extend at least substantially parallel to the grooves (1) and in each case at least two sipes (6) have a width of 0.4 mm to 0.6 mm, wherein in each case one groove (1), together with the profile blocks (3, 4) immediately adjoining it, forms a pitch (P₁, P₂, P₃), wherein the pitches (P₁, P₂, P₃) are provided in at least two different pitch lengths and have accordingly different circumferential lengths (L₁, L₂, L₃) at the periphery of the ground contact area of the tyre,
**characterized**
**in that** at least two sipes (6) with a width of 0.4 mm to 0.6 mm extend in shoulder-side profile blocks (3) that belong to pitches (P₂, P₃) with a circumferential length (L₂, L₃) of at least 28 mm, wherein, between two of these sipes (6), a further sipe (7) is arranged, which has a width of 1.1 mm to 2.7 mm,
wherein the further sipe (7) has, in a profile block (3) that belongs to a pitch (P₂) having a circumferential length (L₂) of 28 mm to 32 mm, a width that is less than the width of a further sipe (7) in a profile block (3) that belongs to a pitch (P₃) with a longer circumferential length (L₃).

2. Pneumatic vehicle tyre according to Claim 1, **characterized in that** the further sipe (7) has, in a profile block (3) that belongs to a pitch (P₂) with a circumferential length (L₂) of 28 mm to 32 mm, a width of 1.1 mm to 2.2 mm, in particular 1.3 mm to 1.6 mm.

3. Pneumatic vehicle tyre according to Claim 1 or 2, **characterized in that** the further sipe (7) that belongs to a pitch (P₃) with a circumferential length (L₃) ≥ 34 mm has a width of 1.4 mm to 2.7 mm, in particular 1.5 mm to 2.1 mm.

4. Pneumatic vehicle tyre according to one of Claims 1 to 3, **characterized in that** the difference between the widths of the further sipes (7) in the profile blocks (3) that belong to pitches having a successively longer circumferential length is in each case at least 0.2 mm.

## Revendications

1. Pneumatique destiné à des véhicules de tourisme, en particulier destiné à être utilisé dans des conditions de conduite hivernales, le pneumatique comprenant une bande de roulement, qui est divisée par des rainures (1), en particulier des rainures diagonales ou transversales, ainsi que par des rainures circonférentielles (2) dans des blocs profilés (3, 4) qui sont pourvus chacun d'une pluralité d'incisions (5, 6, 7) auxquels appartiennent des blocs profilés côté épaulement (3), des rainures (1) s'étendant dans les bloc profilés côté épaulement (3) avec un angle de 60° à 85° par rapport à la direction circonférentielle, les incisions (6, 7) s'étendant au moins sensiblement parallèlement aux rainures (1) et au moins deux incisions (6) ayant chacune une largeur de 0,4 mm à 0, 6 mm, chaque rainure (1) formant un pas (P₁, P₂, P₃) avec les blocs profilés (3, 4) immédiatement adjacents, les pas (P₁, P₂, P₃) étant prévus dans au moins deux longueurs de pas différentes et ayant de manière correspondante différentes longueurs circonférentielles (L₁, L₂, L₃) au bord de la surface de contact au sol du pneumatique,
**caractérisé en ce que**
au moins deux incisions (6) d'une largeur de 0,4 à 0,6 mm s'étendent dans des blocs profilés côté épaulement (3) qui appartiennent à des pas (P₂, P₃) d'une longueur circonférentielle (L₂, L₃) d'au moins 28 mm, entre deux de ces incisions (6) étant disposée une autre incision (7) d'une largeur de 1,1 mm à 2,7 mm, l'autre incision (7) d'un bloc profilé (3) qui appartient à un pas (P₂) dont la longueur circonférentielle (L₂) est de 28 mm et 32 mm ayant une largeur inférieure à la largeur d'une autre incision (7) d'un bloc profilé (3) qui appartient à un pas (P₃) de plus grande longueur circonférentielle (L₃).

2. Pneumatique de véhicule selon la revendication 1, **caractérisé en ce que** l'autre incision (7) d'un bloc profilé (3), qui appartient à un pas (P₂) dont la longueur circonférentielle (L₂) est de 28 mm à 32 mm, a une largeur de 1,1 mm à 2,2 mm, en particulier de 1,3 mm à 1,6 mm.

3. Pneumatique de véhicule selon la revendication 1 ou 2, **caractérisé en ce que** l'autre incision (7), qui appartient à un pas (P₃) dont la longueur circonférentielle (L₃) est ≥ 34 mm, a une largeur de 1,4 mm à 2,7 mm, en particulier de 1,5 mm à 2,1 mm.

4. Pneumatique de véhicule selon l'une des revendications 1 à 3, **caractérisé en ce que** la différence des largeurs d'autres incisions (7) des blocs profilés (3), qui appartiennent à des pas ayant graduellement une longueur circonférentiel plus grande, est à chaque fois d'au moins 0,2 mm.
